Europäisches Patentamt

European Patent Office

Office européen des brevets

(11) Publication number : **0 474 421 A2**

# (12) EUROPEAN PATENT APPLICATION

(21) Application number : **91307841.6**

(51) Int. Cl.⁵ : **D04H 1/56, D01D 4/02**

(22) Date of filing : **28.08.91**

(30) Priority : **29.08.90 US 574832**

(43) Date of publication of application :
**11.03.92 Bulletin 92/11**

(84) Designated Contracting States :
**AT BE DE DK FR GB GR IT LU NL SE**

(71) Applicant : **CHICOPEE (a New Jersey corp.)**
**P.O. Box 1151, 317 George Street**
**New Brunswick New Jersey 08903 (US)**

(72) Inventor : **Gubernick, David**
**5 Woodbury Drive**
**Cherry Hill, NJ 08003 (US)**
Inventor : **Kirchhoff, Robert H.**
**115 State Street**
**Amherst, MA 01002 (US)**

(74) Representative : **Fisher, Adrian John et al**
**CARPMAELS & RANSFORD 43 Bloomsbury**
**Square**
**London WC1A 2RA (GB)**

(54) **Spacer bar assembly for a melt blown die apparatus.**

(57) Melt blown die apparatus are provided for producing a fibrous web from a polymer material. The apparatus include die means for providing a molten stream of the polymer material and primary gas means having primary gas discharge channel means for providing a pressurized gas at an exit end of the die means. The primary gas discharge channel means further includes gas lip means for directing a portion of the pressurized gas to the molten polymer stream. Spacer bar means are also provided for determining a fired spacing between the exit end of the die means and the gas lip means. This fixed spacing is substantially preset during assembly of the apparatus for a given range of apparatus operating temperatures and flow rates of the pressurized gas. This invention has been demonstrated to provide increased slot widths and set backs for extremely high exit gas flows approaching Mach 0.8. The invention also substantially eliminates centering offsets and dimensional instability associated with adjustment screws previously used for determining the spacing between the exit ends of the gas discharge channels and the die.

EP 0 474 421 A2

Jouve, 18, rue Saint-Denis, 75001 PARIS

_Fig.1_

## Field of the Invention

This invention relates to melt blown processes for the production of micro-denier fibrous webs from polymer stock, and more particularly, to the means for defining and maintaining a spacing between the air lip and nosepiece of a melt blown die apparatus for large air flows.

## Background of the Invention

Current melt-blown technology produces microfibers of plastic in which a plurality of laterally spaced, aligned hot melt strands of polymeric material are extruded downwardly and are immediately engaged by a pair of heated and pressurized, angularly colliding gas streams. The gas streams function to break up the strands into fine filamentous structures which are attenuated and thermally set for strength.

The feed stock used for melt blown procedures is typically a thermoplastic resin in the form of pellets or granules which are fed into the hopper of an extruder. The pellets are then introduced into a heated chamber of the extruder in which multiple heating zones raise the temperature of the resin above its melting point.

The screw of the extruder is usually driven by a motor which moves the resin through the heating zones and into and through a die. The die, which is also heated, raises the temperature of the resin and the chamber to a desired level, at which point, the resin is forced through a plurality of minute orifices in the face of the die. As the resin exits these minute orifices, it is contacted by a pressurized hot gas, usually air, which is forced into the apparatus through air discharge channels located on either side of the resin orifices. The hot gas attenuates the molten resin streams into fibers as the resin passes out of the orifices.

The width of the slot-like opening in the bottom of the air discharge channel is referred to as the air gap or "slot width". The outlets of the resin orifices and the exit ends of the air discharge channels may be in the same plane or may be offset. This offset is referred to as the "set back" dimension. Typically a negative set back, in which the end of the air discharge channel, or air lip, is below the resin orifices is preferred.

To meet the various thermal and air flow rates required for various materials and filament strengths, prior artisans have employed adjustable blocks which have included externally activated bolts or screws for defining the distance between the lip of the discharge channel and the exit end portion or "nosepiece" of the die. See Buehning, U.S. 4,818,463, April 4, 1989; and Langdon, U.S. 3,942,723, March 9, 1976 (especially FIG. 7). While in the main, such measures have provided means for setting the critical parameters of slot width and vertical set back, these adjustment bolts have caused slot width centering offsets and dimensional instability during heat-up and operation. Accordingly, there remains a need for a melt blown die having more accurate nosepiece to air lip dimensional control.

## Summary of the Invention

Melt-blown die apparatus are provided for producing a fibrous web from a polymer material. In a preferred configuration, the apparatus includes die means for providing a molten stream of a polymer material and primary gas means having primary gas discharge channel means for providing a pressurized gas at an exit end of the die means. The apparatus further includes gas lip means, forming a portion of the primary gas discharge channel means and disposed to direct a portion of the pressurized gas to the molten polymer stream. The apparatus also includes spacer bar means for determining a fixed spacing between the exit end of the die means and the gas lip means. This fixed spacing is substantially preset during assembly of the apparatus and is set for a given range of apparatus operating temperatures and flow rates for the pressurized gas and polymers chosen.

Accordingly, this invention provides fixtures for presetting both the set back and slot width dimensions of the spacing between a die nosepiece and the gas lip at the exit end of the gas discharge channel of a melt blown die. Because of increased system rigidity and substantial dimensional control, the systems of this invention can be employed to produce non-woven fibrous webs having consistent bulk at widths of up to 180″ or more. The apparatus can be equipped with spacer bars of controlled thicknesses greater than about .25 inches for defining slot widths and set backs of up to about 1″. These larger dimensions have been demonstrated to produce economical gas flows even at speeds approaching about Mach 0.8.

## Brief Description of the Drawings

The accompanying drawings illustrate preferred embodiments of the invention according to a practical application of the principles thereof and in which:

FIG. 1 is a front elevation, cross-sectional view of a preferred melt blown die apparatus of this invention illustrating preferred spacer bar means, air lip means and other novel features of the apparatus;

FIG. 2 is an enlarged detail of the exit portion of the die of FIG. 1 illustrating preferred minimum, in phantom, and maximum set back and slot width dimensions;

FIG. 3 is a partial enlarged cross-sectional view of the exit portion of the die of FIG. 1 illustrating the placement of both a slot width and set back spacer bar for determining an intermediate opening between the air lip and the nosepiece; and

FIG. 4 illustrates a partial enlarged cross-sectional view of the exit portion of the die of FIG. 1 illustrating a preferred set back spacer bar for setting a maximum opening between the air lip and nosepiece of the die.

## Detailed Description of the Invention

This invention provides a melt blown die apparatus for producing fibrous web materials from polymer stock, such as polypropylene pellets. The apparatus includes die means for providing a molten stream or extrusion of the polymer material and primary gas means having primary gas discharge channel means for providing a pressurized gas at an exit end of the die means. The primary gas discharge channel means of this invention includes gas lip means for directing a portion of the pressurized gas to the molten polymer stream. This invention further includes spacer bar means for determining a fixed spacing between the exit end of the die means and the gas lip means. This fixed spacing is substantially preset during assembly of the apparatus for a given range of apparatus operating temperatures and flow rates for the pressurized gas and polymers chosen.

In an another more detailed embodiment of the invention, a melt-blown die apparatus is provided which includes die means for providing a molten stream of polymer material. The die means includes a protruding nosepiece for directing the molten stream. This embodiment further includes primary air means comprising an elongating discharge channel having an air lip disposed at an air outlet end of the elongated discharge channel for directing an air-containing pressurized gas along a path which is directed to attenuate the molten polymer stream. The elongated discharge channel comprises first and second discharge blocks. The first discharge block is fastened with a first connecting means to the second discharge block and the second discharge block is, in turn, fastened together with a second connecting means to the air lip. This embodiment also includes spacer means for determining a fixed spacing between the protruding nosepiece and the air lip which is substantially preset for a given range of operating temperatures of the apparatus. The spacer means includes a slot width spacer bar disposed between the first and second discharge blocks for defining a slot width dimension between the air lip and the nosepiece and a set back spacer bar disposed between the air lip and the second discharge block for defining a set back dimension between the air lip and the nosepiece. The slot width and set back spacer bars of this embodiment include a thickness of greater than about .25 inches, and preferably greater than about .5 inches.

This invention also provides a method for assembling a melt blown die apparatus which includes providing die means for providing a molten polymer stream and primary air means having primary air discharge channel means for providing a pressurized air-containing gas at an exit end of the die means. The air discharge channel means includes air lip means for directing a portion of the pressurized gas to the molten polymer stream. A spacer bar means is provided for determining a fixed spacing between the exit end of the die means and the air lip means. The primary air discharge channel means includes a plurality of discharge blocks which are torqued together, preferably at about 400-525°F, with a plurality of connecting members along with the air lip means whereby the spacer bar means is disposed within the primary air discharge channel means for presetting the fixed spacing for a given range of apparatus operating temperatures and flow rates for the pressurized gas.

As used herein, the term "molten stream", used in connection with the extrusion of polymer material, is meant to include molten polymer, but may include some solids. It is further understood that this molten stream almost immediately becomes a fibrous polymer or microfiber when contacted with the pressurized gas coming from the air discharge channels. Also as used herein, the term "substantially preset" means that the present invention is set, preferably at the factory, for a given nosepiece to air lip spacing during assembly. It is, nevertheless, expected that minor dimensional changes to the melt blown die apparatus could occur after assembly for example further torquing and loosening of bolts by operators, adjustments to the restrictor bar, as well as the distortion caused by physically loading and moving the melt blown die, all of which may have some small impact on the preset dimensions. Nevertheless, one of the principles of this invention is to provide means for substantially presetting the set back and slot width dimensions without currently used adjustment bolts which have been known to produce inconsistent spacing and attendant discontinuities in the fibrous web. The invention will be further understood within the context of the following more detailed discussion.

The melt blown process is a manufacturing method for producing a fibrous web using a single process which converts polymer pellets directly into micro-denier fibers. The key elements are the polymer feed system, air supply system, die and web collection system. Preferred embodiments for these systems will now be described.

The polymer feed system preferably involves resin handling, extrusion, extrudate filtration and metering or pumping. The resin pellets or granules are loaded into a hopper that supplies a feed throat portion of the extruder. The hopper may have drying and oxygen elimination equipment depending on the resin employed. The most common resin chosen is polypropylene which sometimes requires a nitrogen purge for minimizing oxidation. Preferably, the resins of this invention are fiber grades with melt flow indexes (MFI) of about 35-1200. The most preferred resin is a 35 MFI polypropylene.

The preferred extruder for, the melt blown operation of this invention is a single screw device with a length to diameter ratio (L/D) range of about 24-32, preferably about 30. Twin screw units, melter pot systems and other variations are also acceptable. The single screw extrusion feed ports are preferably jacketed for cooling. The extruder screw design is resin dependent, although general application screws for polyolefins, such as polypropylene, or polyamides, such as nylon, are preferred. The extruder also can include barrel temperature controls, such as proportional-Differential-Integral (PID) (heat and cooling - on/off) controllers which employ discrete units, PLC or microprocessor configurations. A preferred extruder barrel temperature profile for a four zone unit is 400-500-525-525°F for the 35 MFI polypropylene resin. Screw rotation can be provided by a motor through a gear box to the screw. DC motor systems and belt drive units are preferably used for this purpose. The speed of the extruder screw is used to maintain a set pressure at the metering pump inlet. The inlet pressures for melt blowing polypropylene are preferably about 500 to 2000 psig, more preferably about 900 psig. A melt temperature of about 550°F is ideal for operability. A pressure feedback loop sensor is preferably placed directly into the flow stream for better control.

Melt blown processes, as with other extrusion processes, require filtration of the polymer melt. Cartridge filters, screen packs, and other means can be employed, although this invention preferably uses a 150 micron cartridge filter system, for polypropylene. The filter as well as all interconnecting piping for the polymer stream is heated with electrically heated bands, or a hot fluid system, and controlled by a PID (heat only on/off) system. Typical temperatures employed by this invention are 550°F for the filter and 550°F for the piping.

Following filtration, the melt is metered into the die with a melt pump, preferably a positive displacement gear-type pump. This pump provides the pressure and flow control necessary for quality die operation. The inlet pressure to the pump is controlled by extruder speed pressure feedback. The speed of the pump is controlled by a DC motor system through a gear box and linkage, such as a universal shaft, to the pump. The pump temperature is preferably controlled with electrical power PID (heat only on/off) control to obtain a melt temperature of about 550°F for polypropylene extrusion. Die inlet pressures of about 300 to 1000 psig result with a flow rate of about 4.0 pounds per linear inch of die per minute.

The preferred operating and construction parameters for the novel primary air equipment of this invention will now be described. The primary air supply system involves the compression of a gas, preferably plant air or external air, with minimal filtration. The pressurized air is preferably electrically heated directly, or indirectly, with a gas or oil fired furnace, to a controlled temperature. The now heated and pressurized air is metered to the die. Metering is done through pressure regulating valves, although true flow control units could also be used. Preferred air temperatures at the die inlet are about 500 to 650°F, more preferably about 550°F. The temperature and pressure at the die inlet are strong functions of the pressure drop through the die and the resultant temperature drop through the system. Typically, artisans have employed 35 to 75 pounds of air per pound of polymer with air pressures ranging from 10 to 60 psig with commercially available dies. Since this invention has been designed to produce high strength fibers, air flow rates of about 100 to 150 pounds of air per pound of polymer were selected. Commercially available dies could not handle this air flow rate reliably or at pressures that were economical. In the preferred die design of this invention air pressures of about 15 psig inlet at about 135 pounds of air per pound of polymer at a polymer flow rate of about 4.0 pounds per linear die inch per minute are employed.

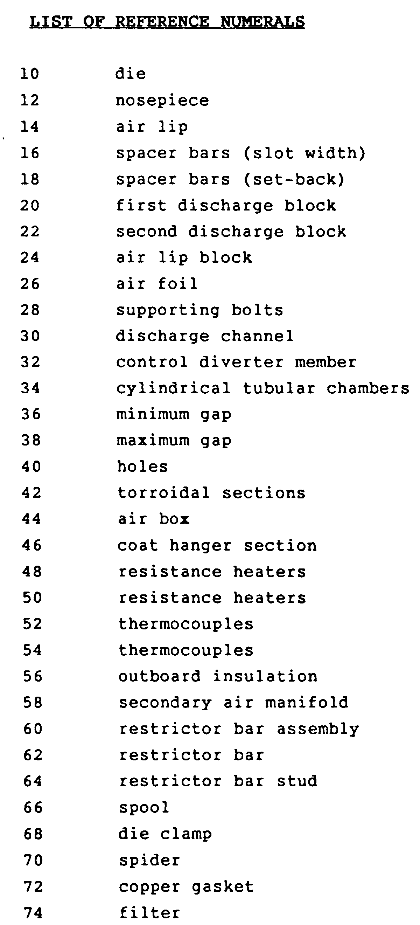

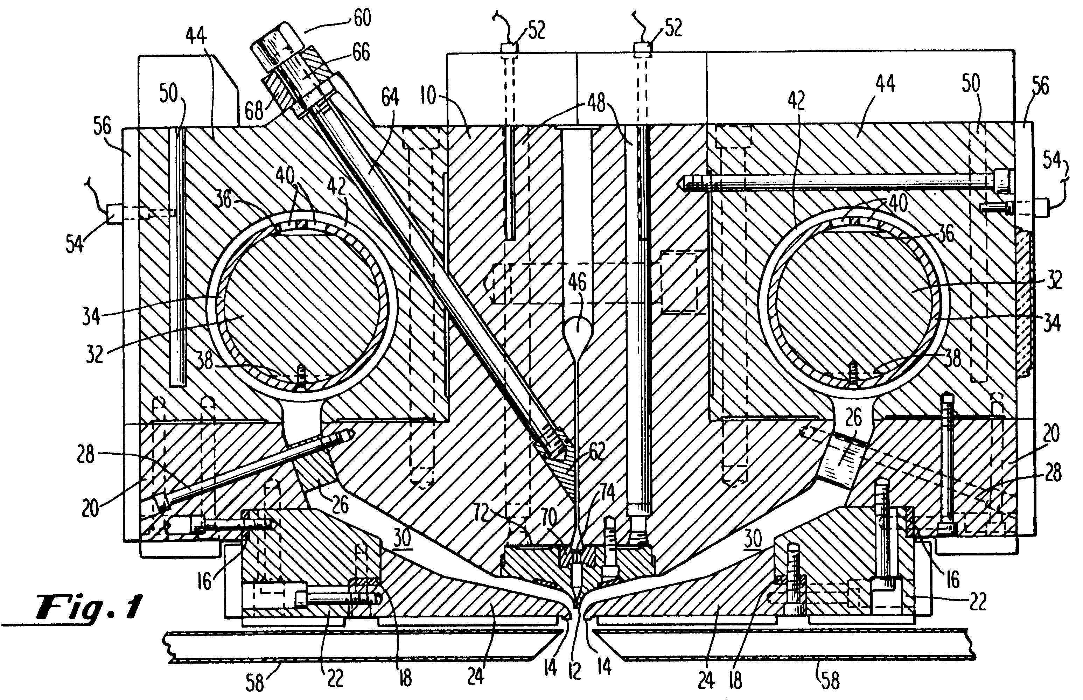

Referring now to FIG. 1, the preferred air flow path chosen for the primary air supply system of this invention is an open design with no substantial obstructions or balancing members. Preferably, the only interruption in the path are air foils 26 surrounding each of the supporting bolts 28 for the preferred primary air discharge channel 30. This unique aerodynamic design and proven method of fabrication has resulted in very low inlet air pressures of up to about 20 psig, and preferably about 10-15 psig, for producing very high air flows, e.g., about 90-200 pounds of air per pound of polymer at about 4.0 pounds/linear inch/minute. These parameters permit product and process extensions where prior art equipment was limited. Moreover, the air flow temperature drop due to aerodynamic losses is minimized to less than about 50°F, preferably about 25°F as opposed to greater than about a 100°F drop in commercially available units. The lower temperature and pressure requirements of this invention produce significant energy savings for the operating plant and thus allow for economical operation for otherwise questionable process.

In the preferred primary air system embodiment of this invention, the air enters the die 10 via four inlets into a pair of cylindrical tubular chambers 34. Each cylindrical chamber 34 is fitted with a pressure control diverter member 32 which assures even pressure distribution and mass uniformity across the die width. The diverter member 32 has a minimum gap 36 at about the die center and a maximum gap 38 (shown in phantom) at the ends or "entrances" of each chamber 34. The air passes through a series of holes 40 at the top of the chambers 34 above the diverter member 32 to fill torroidal sections 42 along the die width. The flow then fills two elongated angular discharge channels 30 that approach both sides of the nosepiece 12. The air meets the polymer strands and then exits the die 10 via a rectangular channel or sharp edge. As the die design is tailored for a given resin or range of products, the air flow channel member surfaces are aerodynamically tuned for a given set of set back and slot width dimensions. The air flow path width is preferably wider than the nosepiece 12 active width. This design also minimizes the negative edge or end effects.

The air box 44, or air manifold support member, is typically supported outboard of the main die body halves in the prior art. This mounting technique can cause bending moments in the air discharge channel and irregular slot width and set back spacing. The unique design of one embodiment of this invention uses the mass and stability of the main die body halves to support the air box 44 for minimizing bending moments. This integral design allows for heat transfer between these members and enables facilitated insulating of both the air box 44 and the main die body halves of the die 10. The integral design also provides thermal and structural integrity to the die assembly, thus allowing both dimensional and thermal stability.

Primary air temperature control has typically been left to natural processes in the prior art. The preferred design of this invention employs two sets of heat zones. The first set, preferably comprising electrical resistance heaters 48 and thermocouples 52, provides heat close to the coat hanger section 46 of the main die body halves. The second set of heat zones, preferably comprising electrical resistance heaters 50 and thermocouples 54, provides heat outboard of the air boxes which surround each cylindrical chamber 34. The second set of heat zones will temper and/or stabilize the air passing through the air box 44 and cylindrical chambers 34.

The use of the outboard temperature zones also provides a thermal base for the die structure. This will help to prevent warping, dimensional variations of slot width, or other thermal distortions. Thermal stability and dimensional control is also aided by preferred outboard insulation 56 over the external die surfaces which accounts for less thermal disruption of the air stream and better cross direction mass flow control of the air.

Preferred dimensional and operational characteristics of the exit end of the die of this invention will not be described. The melt blown die 10 of this invention is the critical element in combining the air and polymer. Cross web uniformity is the key to fabric quality. Web strength, weight distribution, bulk and other parameters are the typical criteria used to quantify die operation. The polymer path through a die 10 is preferably a coat hanger design with a linear spinnerette type nosepiece as the exiting port of the exit end. The exit capillaries are preferably about 0.010 to 0.020 inches in diameter (L/D range of 8 to 12) with spacing of about 20 to 40 holes per inch, more preferably about 0.0145 inch diameter holes (L/D = 10) with a spacing of about 30 holes per inch. Electrical heat and PID (heat only on/off) controls are preferably used for die temperature maintenance. Polymer filtration within the die 10 using 150 micron filters is preferred. The dimensional control of the air lip 14 or air knives allow air to exit with the polymer at high speed, above about 0.5 Mach, preferably up to about 0.8 Mach. An included angle of about 60° was employed for the nosepiece 12 and air lip 14 geometry.

The polymer yarns produced by the dies of this invention can be drawn to micro-denier size of about 1 to 5 microns. In order to produce high strength fibers, the use of secondary air was employed for quenching and/or insulating from surrounding temperatures. The secondary air manifold 58 utilizes room temperature air supplied by a blower system and injects the cool air just below the primary air/polymer exit end of the die 10. The fibers are then projected horizontally or vertically, to a moving porous belt (not illustrated), preferably made from woven stainless steel. A vacuum chamber is preferably created under the belt to exhaust the primary air, secondary air, and other entrained air. Further, the vacuum retains the fibers on the belt until a stable web has been collected. At this point the fibers of the web are lightly bonded together by residual polymeric melt heat in the fibers and the primary air. Further bonding may be required to satisfy product needs.

The dimensional control of the air lip - nosepiece relationship will now be discussed. The slot width, the distance from internal edges of the air lips 14 and set back, the distance between edge of the nosepiece 12 to edge of the air lips 14 are critical dimensional characteristics for product manufacture using a melt blown die. Typical dimensions for these parameters on prior art devices are 0.045 to 0.090 inches for set back and 0.030 to 0.120 inches for slot width. Due to the greatly increased air required by this invention, slot widths of about 0.35 inches and corresponding set backs of about 0.20 were preferred to assure economical air flow and exit flows of up to about Mach 0.8.

The typical method disclosed by the prior art for setting these parameters is by adjusting screws accessed from the die exterior for both the horizontal slot width and vertical set back. This causes centering offsets and dimensional instability during heat-up and operation. The preferred design of this invention utilizes spacer bars 16 and 18 in the vertical and horizontal directions to set the slot width and set back assemblies. The component members of the elongated discharge channels 30 are then torqued and held into a fixed position. As die widths are increased from about 20 inches to greater than about 60 inches this becomes increasingly important for product uniformity and set-up. The wide dies of this invention preferably employ spacer bars, of at least about .25 inches or greater, preferably greater than about .50, and not shims, i.e., bars of of significantly less thickness which are used singularly or in multiples. The shim system cannot be easily controlled during assembly and usually requires external adjustments which are inherently unstable. It has been determined that a spacer bar of at least about .25 inches in transverse, or separating, thickness permits substantially flat machining and does not exhibit a prohibitive about of thermal distortion. The spacer bar system and final hot torquing of the discharge blocks and air lip members locks in predetermined dimensions selected for product or process needs, such as operational temperatures and air flow rates, and allows for reliable quality control. Within a wide range, the set back and slot width parameters can be changed at assembly by using specific bars, for examples, having thickness of about .25, .5, 1.0, 1.5 and 2.0 inches, to fit these needs.

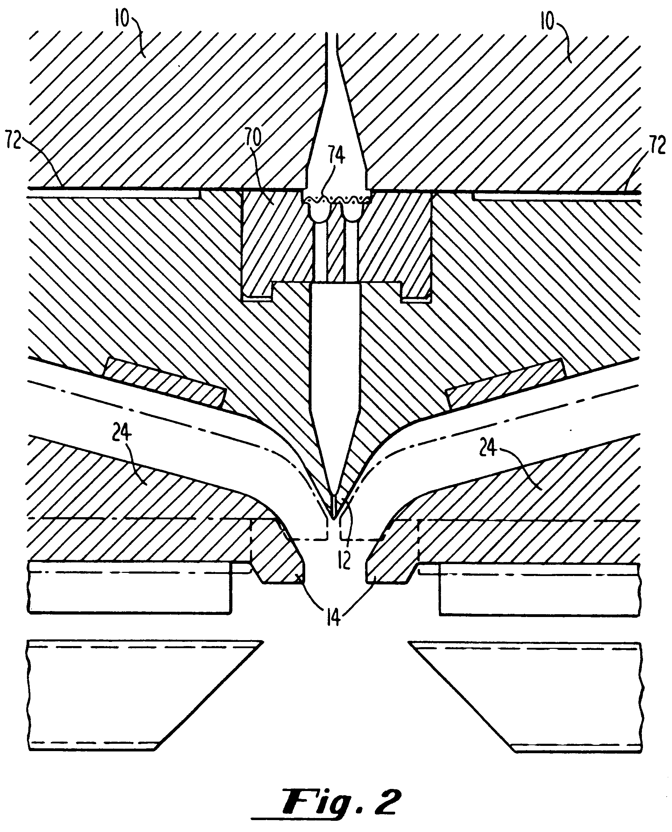

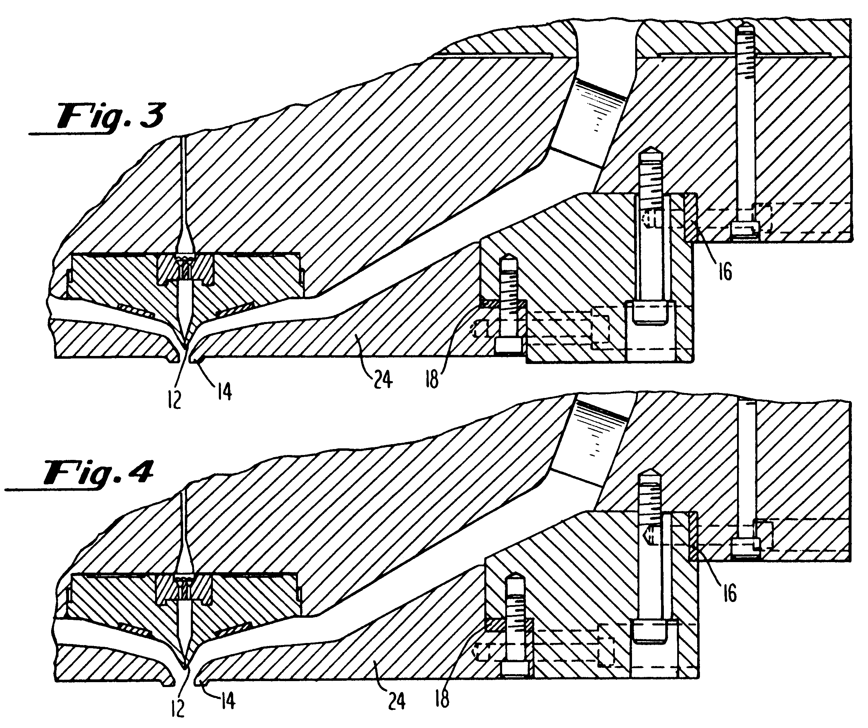

As illustrated in FIG. 2 the air lips 14 can be disposed with wide set back and slot width parameters as illustrated, or adjusted with spacer bars to achieve minimum set back and slot width parameters, as described in phantom. In FIG. 3, an intermediate dimensional variation is described whereby spacer bars of intermediate thicknesses are provided between the first and second discharge blocks in a vertical plane, while another intermediate set back spacer bar is disposed between the second discharge block 22 and the air lip block 24 for defining an intermediate set back for the die opening.

Referring now to FIG. 4, there is shown a preferred spacer bar arrangement for defining a maximum die opening in which a maximum size set back spacer bar is inserted between the second discharge block 22 and the air lip block 24 for maximizing the distance between the air lip 14 and the end of the nosepiece 12. In this embodiment, a minimum thickness slot width spacer bar is provided between the first and second discharge blocks 20 and 22. Centering of the nosepiece can be facilitated by the use of preferred machined parts that have defined mechanical stops which are torqued into position.

The construction and application of the preferred restrictor bar assembly 60 will now be discussed. The polymer flow path of commercial melt blown dies is typically a simple coat hanger design leading to a filter supported by a breaker plate and then to the nosepiece.

This gives little versatility, or flexibility. The preferred polymer flow path of this invention incorporates a restrictor bar 62 along one side of the main die body with studs 64 to the outer surface of the die. The cross directional shape of the restrictor bar 62 causes the polymer flow to be adjusted for better uniformity or for countering edge effects within the coat hanger 46 prior to engaging filter 74. The restrictor bar shape is determined by the tension or compression on the restrictor bar studs 64. This force is applied by the use of the internal threads in the restrictor bar spools 66 on the outside of the die. If a compressive force is applied to the stud 64 the spool 66 will push against the upper surface of the die clamp 68 forcing the restrictor bar 62 to retract and allowing more flow through the die. Conversely, if tension is applied to the stud 64 the spool 66 will push against the lower surface of the clamping member 68 and extend the restrictor bar 62 into the flow stream causing less mass flow in that area of the die. The position of the restrictor bar 62 can be determined quantitatively by measuring the extension of the micro-adjusting pins beyond the surface the clamping member 68. The number of studs 64 and micro-adjusting pins is a function of die width and are preferably spaced on 3 inch and 6 inch centers. The studs 64 are pinned to the restrictor bar 62 to avoid rotation with the spool. The restrictor bar 62 can account for resin flow inconsistencies and flow anomalies in the coat hanger 46, breaker plate and/or nosepiece 12. Further, extrusion of varied resins, varied melt temperatures and/or varied flow rates is possible with one die assembly.

The preferred nosepiece 12 sealing arrangement will now be discussed. The assembly of the nosepiece 12 to the main die body halves of the die 10 has in the prior art caused equipment damage and/or premature failure of the nosepiece in commercial designs. This design creates a flat surface, within 0.002 inches, across the nosepiece upper surface inboard and outboard sections. This increases the sealing area, but more importantly, does not introduce any stress on the capillary area of the nosepiece at assembly or during operation. In addition, the spider 70, also referred to as a breaker plate, and nosepiece are considered a set and are match machined as an assembly. This assembly stress has been the root cause of many nosepiece 12 failures. In order to enhance sealing, the use of a soft-copper gasket 72 was employed. This gasket 72 enhances sealing and limits stress. Further, the assembly scheme described is not sensitive to bolt torque and other assembly techniques employed to protect the nosepiece.

From the foregoing it is understood that the present invention provides improved melt blown die apparatus which include preset spacer bar means for setting the critical dimensional characteristics for product manufacture. The increased dimensional control of this invention enables slot widths and corresponding set backs of up to about 1.0 inch while simultaneously enabling air flow rate at the die exit end of up to about Mach 0.8. All of this has been accomplished without the slot width centering offsets and dimensional instability associated with prior art adjustment screws and the like. Although various embodiments have been illustrated, this was for the purpose of describing, but not limiting the invention. Various modifications, which will become apparent to one skilled in the art, are within the scope of this invention described in the attached claims.

**Claims**

1. A melt blown die apparatus for producing a fibrous web from a polymer material, said apparatus having die means for providing a molten stream of said polymer material and primary gas means having primary gas discharge channel means for providing a pressurized gas at an exit end of said die means, wherein said apparatus comprises: gas lip means for directing a portion of said pressurized gas to said molten polymer stream, said gas lip means forming a portion of said primary air discharge channel means; and spacer bar means for determining a substantially fixed spacing between said exit end of said die means and said gas lip means, said fixed spacing being substantially preset during assembly of said apparatus for a given range of apparatus operating temperatures and flow rates for said pressurized gas.

2. The apparatus of Claim 1 wherein said primary gas discharge channel means comprises an elongated discharge channel, said gas lip means forming an gas outlet end of said elongated discharge channel.

3. The apparatus of Claim 2 wherein said exit end of said die means comprises a nosepiece which extends into said elongated discharge channel proximate to said gas lip means.

4. The apparatus of Claim 2 wherein said gas lip means comprises a lip extender portion disposed for directing said pressurized gas along a path which is in contact with and generally parallel to said molten polymer stream.

5. The apparatus of Claim 1 wherein said elongated discharge channel means comprises first and second discharge blocks, said first discharge block fastened with a first connecting means to said second discharge block and said second discharge block fastened together with a second connecting means to said air lip means.

6. The apparatus of Claim 5 wherein said spacer bar means comprises a slot width spacer bar disposed between said first and second discharge blocks for defining a slot width dimension between said gas lip means and said exit end of said die means.

7. The apparatus of Claim 6 wherein said spacer bar means further comprises a set back spacer bar disposed between said gas lip means and said second discharge block for defining a set back dimension between said gas lip means and said exit end of said die means.

8. The apparatus of Claim 7 wherein said slot width and set back spacer bars have a thickness of greater than about .25 inches.

9. The apparatus of Claim 7 wherein said first and second connecting means comprise a plurality of spaced bolts, said bolts being hot torqued into a fixed position during assembly of said apparatus.

10. The apparatus of Claim 9 wherein said first discharge block is bolted to said second discharge block at a temperature of about 400-525°F with said slot width spacer bar disposed therebetween.

## LIST OF REFERENCE NUMERALS

| | |
|---|---|
| 10 | die |
| 12 | nosepiece |
| 14 | air lip |
| 16 | spacer bars (slot width) |
| 18 | spacer bars (set-back) |
| 20 | first discharge block |
| 22 | second discharge block |
| 24 | air lip block |
| 26 | air foil |
| 28 | supporting bolts |
| 30 | discharge channel |
| 32 | control diverter member |
| 34 | cylindrical tubular chambers |
| 36 | minimum gap |
| 38 | maximum gap |
| 40 | holes |
| 42 | torroidal sections |
| 44 | air box |
| 46 | coat hanger section |
| 48 | resistance heaters |
| 50 | resistance heaters |
| 52 | thermocouples |
| 54 | thermocouples |
| 56 | outboard insulation |
| 58 | secondary air manifold |
| 60 | restrictor bar assembly |
| 62 | restrictor bar |
| 64 | restrictor bar stud |
| 66 | spool |
| 68 | die clamp |
| 70 | spider |
| 72 | copper gasket |
| 74 | filter |

*Fig. 1*

*Fig. 2*

Fig. 3

Fig. 4